# EUROPÄISCHE PATENTANMELDUNG

(11) **EP 3 001 360 A1**
(43) Veröffentlichungstag der Anmeldung: **30.03.2016**
(21) Anmeldenummer: 15182952.0
(22) Anmeldetag: 28.08.2015
(51) Int. Cl.: G06Q 10/04

(54) **RECHENVORRICHTUNG UND VERFAHREN ZUR VERARBEITUNG GROSSER DATENMENGEN**

(30) Priorität: 29.09.2014 DE 102014219657
(71) Anmelder: Siemens Aktiengesellschaft, 80333 München (DE)
(72) Erfinder: Hapfelmeier, Andreas, 81543 München (DE); Weber, Stefan Hagen, 81927 München (DE); Bullert, Susanne, 81827 München (DE); Koberg, Henrik, 80538 München (DE)

(57) **Zusammenfassung**

Verfahren zur Verarbeitung großer Datenmengen für einen Prognosedienst in einer Rechenvorrichtung(30), umfassend die Verfahrensschritte:
- Bereitstellen (12) einer Ausgangsdatenmenge umfassend erste Daten, die mindestens einem Basisparameter in einem vorgegebenen Basis-Wertebereich zugeordnet sind, und zusätzliche Daten zu unterschiedlichen Kontexten,
- Bilden (13) einer Basisdatenmenge durch Extrahieren von ersten Daten und vorbestimmter Kontextdaten aus der Ausgangsdatenmenge entsprechend vorbestimmter Kategorien,
- Aufteilen (14) der Basisdatenmenge in eine Vielzahl von Teildatenmengen, wobei jede Teildatenmenge lediglich die Basisdaten in jeweils einem Teilbereich des Basis-Wertebereichs des mindestens einen Basisparameters umfasst,
- Lernen (15) eines Vorhersagemodells für jede einzelne Teildatenmenge und Erstellen einer Prognose (16) basierend auf mindestens einem der gelernten Teil-Vorhersagemodelle.

Die Rechenvorrichtung ist derart ausgebildet das Verfahren auszuführen.

## Beschreibung

Die Erfindung betrifft ein Verfahren zur Verarbeitung großer Datenmengen für einen Prognosedienst in einer Rechenvorrichtung sowie die entsprechende Rechenvorrichtung und ein Computerprogrammprodukt mit Programmbefehlen zur Durchführung des Verfahrens.

Neben der Wettervorhersage, die eine Prognose über das Wetter der nächsten Tage abgibt, existieren mittlerweile eine Reihe weiterer Prognosedienste. Beispielsweise gibt es Prognosedienste, die Vorhersagen für den Strom-, Gas- und Fernwärmebedarf bei Energieversorgern abhängig von einer lokalen Wetterprognose sowie weiteren Einflussgrößen wie Wochenende oder Arbeitstag, Feiertage, etc. berücksichtigen. Neben solchen Prognosediensten für Energieversorger werden auch zunehmend Prognosedienste im Privatkundenbereich in den verschiedensten Anwendungsbereichen gewünscht. Beispielsweise besitzen immer mehr Menschen in Städten kein eigenes Auto, sondern nutzen öffentliche Verkehrsmittel oder einen Car Sharing Dienst oder Bike Sharing Dienst. Insbesondere das Angebot ein Fahrzeug in einer beliebigen Straße abstellen zu können und nicht auf feste Stationen angewiesen zu sein, ermöglicht dabei eine besondere Flexibilität für den Reisenden.

Ein zusätzlicher Trend ist das Anbieten von Diensten zur Planung von intermodalen Reisen, das heißt Dienste, die dem Nutzer eine bestmögliche Kombination von Verkehrsmitteln, wie beispielsweise Bahn, Auto, Fahrrad, vorschlagen und es ermöglichen, die Reise gleich zu buchen. Liegt die geplante Reise noch in der Zukunft, so ist es notwendig, eine gewisse Planungssicherheit zu erhalten, ob ein Sharing Fahrzeug zum gewünschten Zeitpunkt am gewünschten Ort verfügbar sein wird. Für die Prognose der Verfügbarkeit von Sharing Diensten müssen nicht nur Daten über die lokale Verfügbarkeit, wie zum Beispiel welche Fahrzeuge verfügbar beziehungsweise in Wartung sind, und die Standorte der Fahrzeuge bekannt sein. Es müssen zusätzliche Kontextinformationen, wie zum Beispiel das Wetter, Kalender, Straßenkarten, Verkehrsdaten, Ereignisse, berücksichtigt werden. Diese Daten sind möglichst engmaschig für den gewünschten geographischen Bereich zu betrachten.

Bei der Verarbeitung solch großer Datenmengen, bei der beispielsweise aus den genannten Angaben mit Hilfe eines Klassifikationsverfahrens Entscheidungsbäume und daraus Prognosen berechnet werden, tritt ein Problem insbesondere bei der algorithmischen Skalierbarkeit in Bezug auf Speicherkapazität und Lernzeit auf.

Es ist somit die Aufgabe der vorliegenden Erfindung, ein Verfahren zur Bearbeitung großer Daten für Prognosedienste zu schaffen, bei dem die Speicherkapazität und Verarbeitungszeit optimiert und möglichst klein gehalten wird und gleichzeitig eine gute Prognose erreicht wird.

Die Aufgabe wird durch die in den unabhängigen Ansprüchen beschriebenen Maßnahmen gelöst. In den Unteransprüchen sind vorteilhafte Weiterbildungen der Erfindung dargestellt.

Das erfindungsgemäße Verfahren zur Verarbeitung großer Datenmengen für einen Prognosedienst in einer Rechenvorrichtung umfasst die Verfahrensschritte:
das Bereitstellen einer Ausgangsdatenmenge, die erste Daten, die mindestens einem Basisparameter in einem vorgegebenen Basis-Wertbereich zugeordnet sind, und zusätzliche Daten zu unterschiedlichen Kontexten umfasst;
das Bilden einer Basisdatenmenge durch Extrahieren von ersten Daten und vorbestimmten Kontextdaten aus der Ausgangsdatenmenge entsprechend vorbestimmter Kategorien;
das Aufteilen der Basisdaten in eine Vielzahl von Teildatenmengen, wobei jede Teildatenmenge lediglich die Basisdaten in jeweils einem Teilbereich des Basis-Wertebereichs des mindestens einen Basisparameters umfasst; und
Lernen eines Vorhersagemodells für jede einzelne Teildatenmenge und Erstellen einer Prognose basierend auf mindestens einem der gelernten Teil-Vorhersagemodelle.

Durch das Aufteilen der Basisdatenmenge in eine Vielzahl von Teildatenmengen wird der Hauptspeicher deutlich entlastet, da lediglich die geringere Teildatenmenge beim Lernen eines Modells im Hauptspeicher verfügbar sein muss. Die Lernzeit kann ebenfalls skaliert werden, da diese sich für das Lernen basierend auf einer einzelnen Teildatenmenge gegenüber der Lernzeit basierend auf der Gesamtheit der Basisdatenmenge reduziert. Des Weiteren können beispielsweise Teilergebnisse, das heißt Teil-Vorhersagemodelle, bereits für die Prognose freigegeben werden. Somit ist die algorithmische Skalierbarkeit erheblich verbessert.

Die Ausgangsdatenmenge bzw. die Basisdatenmenge kann beispielsweise Daten umfassen, die jeweils einer geographische Länge und einer geographische Breite als Basisparameter zugeordnet sind, die innerhalb eines vorgegebenen geographischen Basis-Wertebereich liegen. Das Aufteilen der Basisdatenmenge in eine Vielzahl von Teildatenmengen, kann beispielsweise durch die Unterteilung des Basis-Wertebereichs in ein Netz von Teilbereichen realisiert sein. Das entspricht einer Unterteilung eines geographischen Gebietes in ein Gitternetz an Teilgebieten. Dabei hat sich des Weiteren gezeigt, dass ein Gesamt-Lernmodell, das sich aus den Teil-Vorhersagemodellen der einzelnen Bereiche zusammensetzt, eine bessere Prognose ergeben kann als ein Lernmodell, das durch einen einzigen Lernvorgang über den gesamten Wertebereich der Basisparameter erstellt wurden. Insbesondere zeigt das aus den einzelnen Teilbereichen zusammengesetzte Gesamtmodell bei manchen Lernalgorithmen weniger "Überschwinger" aus benachbarten Bereichen, die durch den verwendeten Lernalgorithmus entstehen, aber an sich Artefakte darstellen.

In einer Weiterbildung des erfindungsgemäßen Verfahrens werden jeweils zweite Daten für alle die Basisparameter erzeugt, für die kein Datenwert in der Ausgangsdatenmenge ermittelt wurden und diese zweiten Daten werden zu der Basisdatenmenge oder zu den einzelnen Teildatenmengen hinzugefügt.

Üblicherweise enthält die Basisdatenmenge lediglich "positive" Ereignisse, zum Beispiel diejenigen Orte, an denen ein Fahrzeug vorhanden ist. Dies verfälscht die Prognose erheblich. Durch das Hinzufügen von zweiten Daten, die quasi "negative" Ereignisse darstellen, wird die Basisdatenmenge erheblich der Realität angenähert. Zweite Daten werden somit beispielsweise für die Basisparameter, beispielsweise geographische Länge und geographische Breite, erstellt, an denen kein Fahrzeug verfügbar ist. Die zweiten Daten sind entsprechend den ersten Daten strukturiert und umfassen ebenfalls Information zu den vorbestimmten Kontexten. Eine Vorhersage mit einer solchen durch zweite Daten ergänzten Basisdatenmenge ergibt ein wesentlich differenzierteres Prognoseergebnis.

In einer vorteilhaften Variante des erfindungsgemäßen Verfahrens werden zusätzliche, aktuelle Daten bereitgestellt und ein aktuelles Vorhersagemodell basierend auf einer Gesamtdatenmenge, umfassend die aktuellen Daten und die Basisdatenmenge, gelernt.

Dies hat den Vorteil, dass beispielsweise in periodischen Zeitabständen aktuelle Daten bei der Berechnung des Lernmodells berücksichtigt werden. Somit kann das Lernmodell verfeinert werden und auf sich ändernde Verfügbarkeitssituationen angepasst werden. Des Weiteren werden sogenannten Historiendaten, also alle Daten über einen vorbestimmten zurückliegenden Zeitraum, immer bei der Berechnung des Lernmodells berücksichtigt und somit eine über einen langen Zeitraum beobachtete Vorhersage möglich ist. Andererseits ist diese Datenmenge sehr groß und bedarf eine große Speicherkapazität, die mit jeder Aktualisierung größer werden muss.

In einer weiteren Variante des erfindungsgemäßen Verfahrens werden zusätzliche, aktuelle Daten bereitgestellt und ein aktuelles Vorhersagemodell wird basierend auf dem vorher gelernten Vorhersagemodell und lediglich den aktuellen Daten gelernt.

Das jeweils vorherige Vorhersagemodell wird somit nur mit diesen aktuellen Daten nachtrainiert. Dies hat den Vorteil, dass zur Berechnung eines jeden aktuellen Vorhersagemodells eine weitaus geringere Prozessorkapazität benötigt wird als für das erste Vorhersagemodell.

In einer weiteren vorteilhaften Variante umfasst die Ausgangsdatenmenge für das Lernen und Aktualisieren eines Vorhersagemodells lediglich aktuelle Daten und Kontextdaten.

Dies hat den Vorteil, dass auch das erste Vorhersagemodell das basierend auf der Ausgangsdatenmenge berechnet wird, sehr kurzfristig erstellt werden kann. Ein weiterer Vorteil ist, dass keine Historiendaten als Ausgangsdatenmenge in der Rechenvorrichtung gespeichert werden müssen. Dies reduziert die benötigte Speicherkapazität. Andererseits können dadurch datenschutzrechtliche Bestimmungen, die ein dauerhaftes oder überhaupt ein Speichern solcher Historiendaten einschränken und regulieren, erfüllt werden. Nachteilig ist ein solches Verfahren lediglich in einer Anlaufzeit des Prognosedienstes, in dem nur wenige aktuelle Daten als Basis für das Vorhersagemodell vorliegen.

In einer vorteilhaften Variante wird das Lernen des Vorhersagemodells für die einzelnen Teildatenmengen parallel durchgeführt.

Dies hat den Vorteil, dass die Prozessorlast zur Berechnung der einzelnen Teil-Lernmodelle auf mehrere Prozessoren verteilt und somit parallel durchgeführt werden kann. Damit verkürzt sich die Lernzeit signifikant.

In einer vorteilhaften Ausführungsform wird das Extrahieren von Kontextdaten in einer externen Rechenvorrichtung durchgeführt und die so aufbereiteten Daten in die Basisdatenmenge integriert.

Dies ermöglicht es, das Lernen des Vorhersagemodells auf einer Rechenvorrichtung mit begrenzter Funktionalität und Prozessorkapazität durchführen zu können.

Die erfindungsgemäße Rechenvorrichtung zur Verarbeitung großer Datenmengen für einen Prognosedienst umfasst eine Speichereinheit, eine Extraktionseinheit, eine Lerneinheit und eine Prognoseeinheit. Die Speichereinheit ist derart ausgebildet, die Ausgangsdatenmenge und/oder die Basisdatenmenge und/oder die aktuellen Daten und/oder das gelernte Vorhersagemodell zu speichern. Die Extraktionseinheit ist derart ausgebildet, eine Basisdatenmenge durch Extrahieren von ersten Daten und vorbestimmter Kontextdaten aus der Ausgangsdatenmenge entsprechend vorbestimmter Kategorien zu bilden, und die Basisdatenmenge in eine Vielzahl von Teildatenmengen aufzuteilen, wobei jede Teildatenmenge lediglich die Basisdaten in jeweils einem Teilbereich des Basiswertebereichs des mindestens einen Basisparameters umfasst. Die Lerneinheit ist derart ausgebildet, ein Vorhersagemodell für jede einzelne Teildatenmenge zu lernen. Die Prognoseeinheit ist derart ausgebildet, eine Prognose basierend auf mindestens einem der gelernten Teil-Vorhersagemodelle zu erstellen.

Eine solche Rechenvorrichtung hat den Vorteil, eine Basisdatenmenge für einen Prognosedienst durch die bereitgestellte Ausgangsdatenmenge und die Kontexte zu erstellen, dann aber diese Basisdatenmenge vor dem Berechnen der Vorhersagemodelle in Teildatenmengen zu unterteilen, sodass der Lernprozess auch von einer Rechenvorrichtung mit begrenzter Kapazität durchgeführt werden kann.

In einer Variante der erfindungsgemäßen Rechenvorrichtung ist die Lerneinheit derart ausgebildet, das Lernen der Vorhersagemodelle für mehrere der einzelnen Teildatenmenge parallel auszuführen.

Die Lerneinheit kann beispielsweise mehrere Prozessoren umfassen, die jeweils die Vorhersagemodelle für ein oder mehrere Teildatenmengen berechnen. Da jeweils gleiche Funktionen von den verschiedenen Prozessoren ausgeführt werden und die Funktionen unabhängig voneinander sind, kann ein Parallelisieren des Lernens in der Lerneinheit einfach umgesetzt werden.

In einer weiteren Variante ist die Extraktionseinheit derart ausgebildet, jeweils zweite Daten für alle die Basisdaten zu erzeugen, für die kein erster Datenwert in der Ausgangsdatenmenge ermittelt wurde, und diese zweiten Daten der Basisdatenmenge oder zu den einzelnen Teildatenmengen hinzuzufügen.

Eine solche Extraktionseinheit erleichtert und beschleunigt ein Auffüllen der Basisdatenmenge, sodass die Basisdatenmenge sehr schnell erzeugt werden kann.
Unter dem Lernen eines Vorhersagemodells ist das Ausführen eines Lernalgorithmuses bezeichnet, bei dem zum Beispiel basierend auf den Eingangsdaten Entscheidungsbäume erstellt werden, anhand derer eine Prognose für ein in der Zukunft liegendes Ereignis erstellt wird.

Ausführungsbeispiele des erfindungsgemäßen Verfahrens sowie der erfindungsgemäßen Rechenvorrichtung sind in den Zeichnungen beispielhaft dargestellt und werden anhang der nachfolgenden Beschreibung näher erläutert. Es zeigen:
- Fig. 1: ein erstes Ausführungsbeispiel des erfindungsgemäßen Verfahrens in Form eines Ablaufdiagramms;
- Fig. 2: ein zweites Ausführungsbeispiel des erfindungsgemäßen Verfahrens als Ablaufmodell; und
- Fig. 3: ein Ausführungsbeispiel einer erfindungsgemäßen Rechenvorrichtung in Blockdarstellung.

Einander entsprechende Teile sind in allen Figuren mit den gleichen Bezugszeichen versehen.

Um Prognosedienste bereitzustellen, die eine zuverlässige Vorhersage eines Ereignisses oder eines Zustandes liefern, sind unterschiedlichste Kontextinformationen zu berücksichtigen. Solche Kontextinformationen sind beispielsweise das Wetter, Wochentage, besondere Ereignisse, wie Messen, Feste, oder auch Baustellen. Dem liegt die Erkenntnis zugrunde, dass ein zu prognostizierendes Ereignis oder ein gewisses Kundenverhalten abhängig vom vorherrschenden Wetter, von stattfindenden Ereignissen, an Wochentagen oder am Wochenende unterschiedlich ist. Basierend auf in der Vergangenheit liegenden Daten und Kontextdaten werden Vorhersagemodelle ermittelt und unter Berücksichtigung zukünftiger Kontextdaten, wie zum Beispiel einer Wettervorhersage, Kalenderdaten und Ereignisinformationen, eine Prognose berechnet. Zur Berechnung des Vorhersagemodells müssen somit alle entsprechenden Kontextdaten herangezogen werden, sodass sich eine große Datenmenge ergibt.

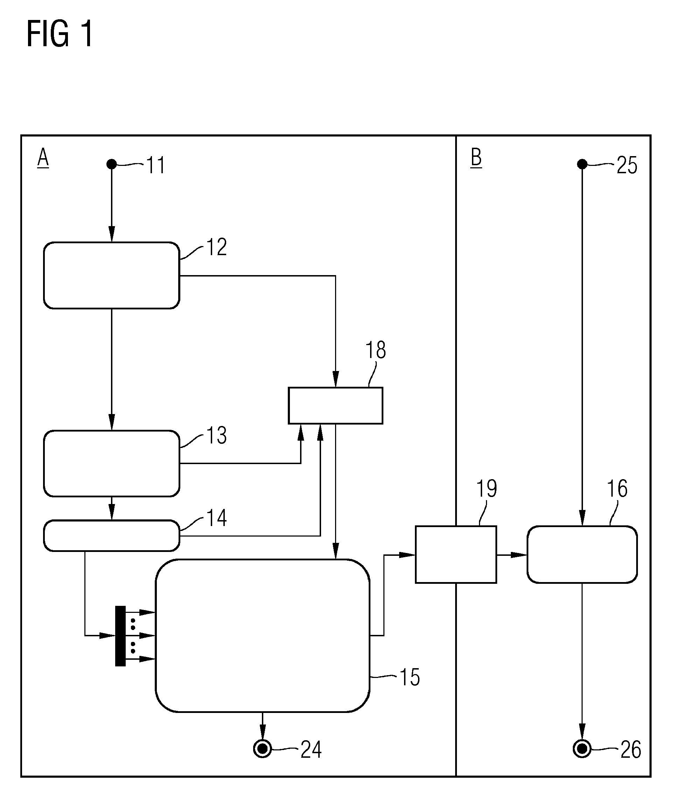

In Figur 1 ist ein entsprechendes Verfahren zur Verarbeitung solch großer Datenmengen für einen Prognosedienst als Ablaufdiagramm dargestellt. Dabei zeigt der linke Teil A des Diagramms die Erstellung des Vorhersagemodells, die rechte Seite B stellt die Bereitstellung einer Prognose dar. Die einzelnen Verfahrensschritte werden anhand eines Beispiels, hier eines Car Sharing Verfügbarkeitsservices, erläutert.

Die Erstellung eines Vorhersagemodells beginnt im Bereich A mit dem Ausgangszustand 11. Als erster Verfahrensschritt 12 werden eine Ausgangsdatenmenge sowie Kontextdaten bereitgestellt. Im Beispiel des Car Sharing Verfügbarkeitsservices sind dies Daten über die lokale Verfügbarkeit der Fahrzeuge des Car Sharing Betreibers oder auch die Anzahl der Fahrzeuge in Wartung in einem in der Vergangenheit liegenden Zeitraum. Zusätzliche Kontextinformationen werden durch Kontextdaten, wie zum Beispiel dem Wetter, Kalender, Straßenkarten, Verkehrsdaten, Ereignisse im betrachteten geographischen Gebiet beziehungsweise umliegenden geographischen Bereichen bereitgestellt. Diese Basisdaten werden in einem Basis-Datenspeicher 18 gespeichert.

Anschließend werden erste Daten und vorbestimmte Kontextdaten entsprechend vorherbestimmten Kategorien oder Merkmalen aus der Ausgangsdatenmenge extrahiert und dem mindestens einen Basisparameter zugeordnet. Solche Kategorien sind beispielsweise für die Verfügbarkeit von Fahrzeugen relevante Merkmale, wie zum Beispiel die ob ein Wochentag oder ein Sonn- oder Feiertag vorliegt. Weitere Kategorien sind beispielsweise Stunde, Monat, die Wettersituation oder auch Ereignisse, wie Messen, Straßenarbeiten oder auch Ferien und beispielsweise der Gesamtflottengröße. Datensätze, die all diese Daten beziehungsweise Informationen umfassen, bilden eine Basisdatenmenge. Diese Kategorien stellen Lernmerkmale dar. Diese Basisdatenmenge wird ebenfalls im Basis-Datenspeicher 18 abgelegt.

Anschließend werden die Basisdatenmenge in eine Vielzahl von Teilmengen aufgeteilt 14, wobei jede Teildatenmenge lediglich die Basisdaten in jeweils einem Teilbereich eines Basis-Wertebereichs umfasst. Im Beispiel des Car Sharing Verfügbarkeitsdienstes sind eine geographische Längen- und Breitenangabe die Basisparameter. Der Basis-Wertebereich umfasst den Abdeckungsbereich des Verfügbarkeitsdienstes, beispielsweise die geographische Ausdehnung einer Stadt. Für die Analyse der Daten wird nun dieser Basis-Wertebereich mit Hilfe eines Koordinatennetzes in einzelne Teilbereiche unterteilt, wobei jede Masche des Koordinatennetzes einen Teilbereich umschließt. Für jeden Bereich kann nun separat analysiert werden, unter welchen Kontextbedingungen welche bzw. wie viele Sharing Fahrzeuge zur Verfügung standen beziehungsweise angefragt wurden. Das Aufteilen der Basisdatenmenge in Teildatenmengen kann auch wahlweise vor dem Bilden einer Basisdatenmenge durch Extrahieren von ersten Daten und vorbestimmten Kontextdaten ausgeführt werden. Die Informationen über die Teilbereiche selbst werden ebenfalls im Basis-Datenspeicher 18 abgelegt. Optional können auch die einzelnen Teildatenmengen im Basis-Datenspeicher 18 abgelegt werden.

Im Verfahrensschritt 15 wird nun für jede einzelne Teildatenmengen ein Vorhersagemodell, beispielsweise durch ein Regressionsverfahren, gelernt. Als Regressionsverfahren kann beispielsweise ein Random Forest Algorithmus verwendet werden, mit dessen Hilfe diverse Entscheidungsbäume während eines Lernprozesses entstehen. Die Vorhersage wird letztendlich durch eine Mehrheitsentscheidung der Entscheidungsbäume festgelegt. Alle erlernten Vorhersagemodelle für jede einzelne Teildatenmenge werden nun in einem Lernmodelldatenspeicher 19 abgelegt. Aus den einzelnen Teil-Vorhersagemodellen ergibt sich ein Vorhersagemodell für den gesamten Basiswertebereich. Es kann aber bereits mit einem einzigen Teil-Vorhersagemodell eine Prognose beschränkt auf dessen Gültigkeitsbereich, d.h. dessen Teilbereich des Basis-Wertebereichs, erstellt werden. Damit ist der Lernprozess in Punkt 24 abgeschlossen.

Bei einer Anfrage 25 für eine Prognose der Verfügbarkeit, beispielsweise eines Car Sharing Fahrzeugs, wird nun basierend auf einer Eingabe, beispielsweise des gewünschten Ortes und Datums, für ein Fahrzeug im Verfahrensschritt 16 eine Prognose erstellt, die basierend auf der Gesamtheit aller Vorhersagemodelle der Teilbereiche eine Aussage trifft. Für die Prognose wird auf die im Lernmodell-Datenspeicher 19 bereitgestellten Lernmodelle zurückgegriffen. Nach Ausgabe eines Prognosewerts ist das Verfahren im Zustand 26 beendet.

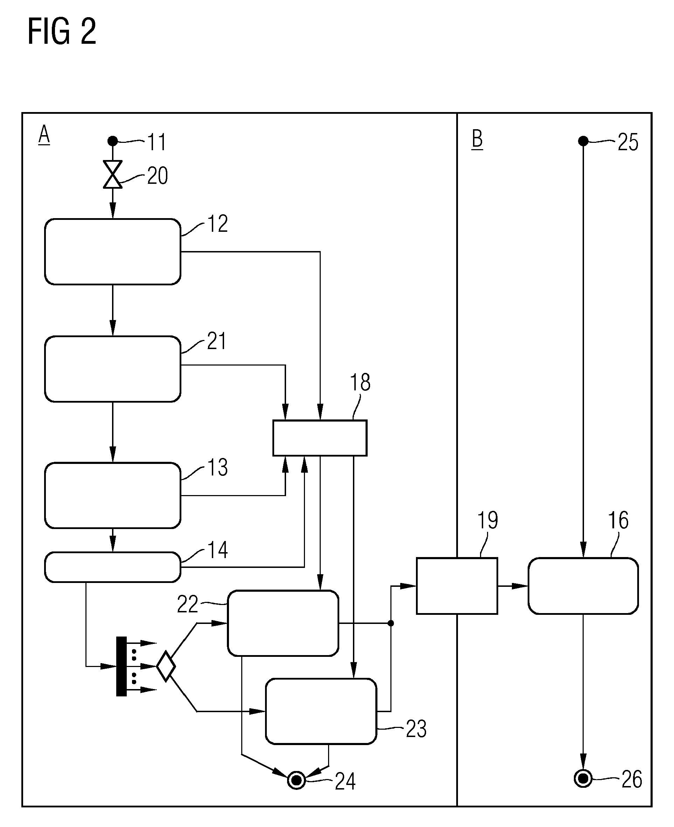

Um die Prognose noch treffender und realitätsnäher zu gestalten, können, wie in Figur 2 dargestellt, im Verfahrensschritt 21 zweite Daten für alle die Basisparameter erzeugt werden, für die kein Datenwert in der Ausgangsdatenmenge ermittelt wurde. Beispielsweise werden alle die Orte, an denen in einem bestimmten Zeitintervall kein Fahrzeug verfügbar war, eine 0 eingetragen. So werden für jeden betrachteten geographischen Standort und für jedes beobachtete Zeitintervall, in der kein Fahrzeug verfügbar war, Daten mit dem Wert 0 erzeugt. Diese zweiten Daten werden dann der Basisdatenmenge hinzugefügt und wiederum im Basis-Datenspeicher 18 abgelegt. Mit dieser aufgefüllten Basisdatenmenge kann nun aber ein realistischeres und somit weitaus zutreffenderes Vorhersagemodell und einer entsprechend besser zutreffenden Prognose erstellt werden.

Um das Vorhersagemodell weiter zu verbessern und an eventuell eintretende geänderte Nutzungsverhalten anzupassen, werden zusätzlich aktuelle Daten, beispielsweise periodisch oder auch in verschiedenen Zeitabständen, zur Ausgangsdatenmenge hinzugefügt, siehe Bezugszeichen 20 in Figur 2. Optional können die aktuellen Daten auch den Teildatenmengen, also nach Verfahrensschritt 14, hinzugefügt werden, insbesondere dann, wenn das Extrahieren 13 von ersten Daten und Kontextdaten und ein Auffüllen 21 der Basisdaten mit zweiten Daten erst nach dem Aufteilen 14 der Basisdatenmenge in Teildatenmengen erfolgt. Der Verfahrensschritt des Aufteilens in Teildatenmengen 14 kann so also auch vor den Verfahrensschritten 13 und/oder 21 des Erzeugens von zweiten Daten durchgeführt werden.

Das Lernen eines aktuellen Vorhersagemodells für jede einzelne Teildatenmenge kann beispielsweise durch das Lernen eines aktuellen Vorhersagemodells basierend auf der bereits verfügbaren Basisdatenmenge gemeinsam mit den aktuellen Daten, siehe Verfahrensschritt 22, durchgeführt werden. Somit wird ein aktuelles Vorhersagemodell, basierend auf einer erweiterten Basisdatenmenge, erstellt. Dies hat jedoch den Nachteil, dass bei einer zunehmend größer werdenden Basisdatenmenge sich die Lernzeit zunehmend erhöht. Alternativ dazu kann im Verfahrensschritt 23 für jede einzelne Teildatenmenge ein aktuelles Vorhersagemodell erzeugt werden, indem basierend auf das vorher berechnete Teil-Vorhersagemodell und lediglich eine einzelne Teildatenmenge ein aktuelles Teil-Vorhersagemodell gelernt wird. Im Zustand 24 ist der Lernprozess beendet.

Ein solches inkrementelles Erzeugen eines Vorhersagemodells hat den Vorteil, dass nach einer ersten Berechnung des Vorhersagemodells basierend auf die Basisdatenmenge, zur Berechnung jedes aktuellen Vorhersagemodells lediglich die aktuellen Daten verwendet werden. Die aktuelle Datenmenge ist weitaus geringer als die Basisdatenmenge und somit reduziert sich auch die Lernzeit für das aktuelle Vorhersagemodell.

In einer weiteren inkrementellen Ausführungsform des Verfahrens können bereits zum Lernen eines ersten Vorhersagemodells lediglich aktuelle Daten und Kontextdaten verwendet werden. In diesem Fall werden keinerlei Ausgangsdaten, also sogenannte Historiendaten, verwendet. Bei einem solchen Verfahren werden die Prognosen mit steigender Anzahl von Iterationen und somit dem Hinzufügen von aktuellen Daten und dem damit verbundenen Nachtrainieren des existierenden Modells zutreffender.

Eine Darstellung der prognostizierten Verfügbarkeit über ein großes Gebiet, wie beispielsweise bei dem betrachteten Car Sharing Verfügbarkeitsdienst, kann durch eine Visualisierung der Verfügbarkeitsdichte erfolgen. Dies kann beispielsweise durch eine sogenannte Heat Map oder auch Densitiy Map erfolgen. Dabei werden beispielsweise geographische Bereiche mit unterschiedlicher Verfügbarkeit in unterschiedlichen Farben dargestellt.

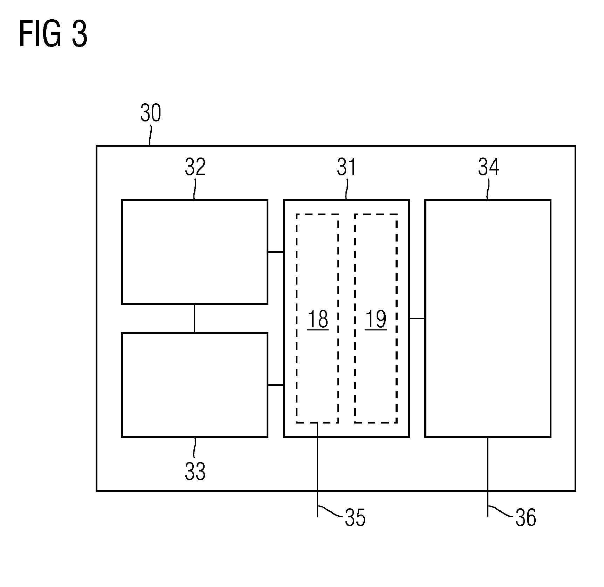

Figur 3 zeigt nun eine Rechenvorrichtung 30, die zur Verarbeitung großer Datenmengen für einen Prognosedienst geeignet ist. Die Rechenvorrichtung 30 umfasst eine Speichereinheit 31, eine Extraktionseinheit 32, eine Lerneinheit 33 sowie eine Prognoseeinheit 34. Die genannten Einheiten sind beispielsweise über einen Datenbus miteinander verbunden.

Die Speichereinheit 31 umfasst dabei einen Basis-Datenspeicher 18, der eine Datenschnittstelle 35 zur Eingabe einer Ausgangsdatenmenge, beispielsweise Historiendaten, sowie Kontextdaten und auch zur Eingabe von aktuellen Daten verwendbar ist. Im Basis-Datenspeicher 18 können optional die Ausgangsdatenmenge und/oder die Basisdatenmenge und/oder die Teildatenmengen und/oder aktuelle Daten gespeichert werden. Um die Speicherkapazität zu optimieren, kann beispielsweise ein inkrementelles Verfahren zum Erlernen des Vorhersagemodells verwendet werden, sodass lediglich die aktuellen Daten im Basis-Datenspeicher 18 abgelegt sein müssen. Insbesondere wenn das inkrementelle Verfahren ausschließlich auf aktuellen Daten auch für das Erlernen eines ersten Vorhersagemodells verwendet wird, ist die benötigte Speicherkapazität gering.

Im Lernmodell-Datenspeicher 19 ist das erlernte aktuelle Vorhersagemodell gespeichert. Es können auch das erste Vorhersagemodell und/oder Zusatz-Vorhersagemodelle und/oder alle weiteren Vorhersagemodelle dort gespeichert sein.

Die Prognoseeinheit 34 greift auf die Vorhersagemodelle im Lernmodell-Datenspeicher 19 der Speichereinheit 31 zu. Die Prognoseeinheit 34 weist eine Anfrageschnittstelle 36 auf, über die eine Eingabe, beispielsweise eine Verfügbarkeitsanfrage umfassend, den gewünschten geographischen Standort eines Fahrzeugs sowie des gewünschten Datums und/oder der gewünschten Uhrzeit eingegeben.

Die Extraktionseinheit 32 ist derart ausgebildet, die vorbestimmten Kategorien aus der Ausgangsdatenmenge und den bereitgestellten Kontextdaten zu extrahieren und gegebenenfalls durch zweite Daten aufzufüllen. Die Extraktionseinheit 32 kann ebenfalls zweite Daten für alle Basisparameter erzeugen, für die kein erster Datenwert ermittelt wurde und diese der Basisdatenmenge oder den einzelnen Teildatenmengen hinzufügen. Die Extraktionseinheit 32 umfasst einen oder mehrere Prozessoren, die das Aufteilen der Basisdatenmenge in Teildatenmengen ausführen. Vorgaben zur Definition der Teilbereiche sind ebenfalls über die Datenschnittstelle 35 eingebbar.

Die Lerneinheit 33 umfasst Prozessoren, die ein Vorhersagemodell für jede einzelne Teildatenmenge lernen, das heißt berechnen können. Die Lerneinheit 33 kann derart ausgebildet sein, das Lernen der Vorhersagemodelle für jede einzelne oder aber auch Gruppen von Teildatenmengen parallel auszuführen.

Optional können auch weitere Kontextinformationen in einer externen weiteren Rechenvorrichtung oder aber auch in einer separaten Einheit integriert in der Rechenvorrichtung 30 durch eine Kontextintegrationsanwendung in die Basisdatenmenge integriert werden. Eine solche Kontextintegrationsanwendung bündelt Kontextdaten und stellt diese dem Prognosedienst zur Verfügung. Somit kann die Integration verschiedener Datenquellen, insbesondere Kontextdatenquellen, ausgelagert werden und dennoch die Analyse und Prognose kontextspezifisch durchgeführt werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Bereitstellung einer Prognose für eine Verfügbarkeit eines Gegenstandes an einem vorgegebenen Basisparameter durch eine Rechenvorrichtung(30), umfassend die Verfahrensschritte:
- Bereitstellen (12) einer Ausgangsdatenmenge umfassend erste Daten, die mindestens einem Basisparameter in einem vorgegebenen Basis-Wertebereich zugeordnet sind, und zusätzliche Daten zu unterschiedlichen Kontexten,
- Bilden (13) einer Basisdatenmenge durch Extrahieren von ersten Daten und vorbestimmter Kontextdaten aus der Ausgangsdatenmenge entsprechend vorbestimmter Kategorien,
- Aufteilen (14) der Basisdatenmenge in eine Vielzahl von Teildatenmengen, wobei jede Teildatenmenge lediglich die Basisdaten in jeweils einem Teilbereich des Basis-Wertebereichs des mindestens einen Basisparameters umfasst,
- Lernen (15) eines Vorhersagemodells für jede einzelne Teildatenmenge und Erstellen einer Prognose (16) basierend auf mindestens einem der gelernten Teil-Vorhersagemodelle,
wobei die Basisparameter eine geographische Längen- und Breitenangabe sind, der Basis-Wertebereich mit Hilfe eines Koordinatennetzes in einzelne Teilbereiche unterteilt wird und jeweils ein Teilbereich eine Masche des Koordinatennetzes umschließt.

2. Verfahren nach Anspruch 1, wobei jeweils zweite Daten für alle die Basisparameter erzeugt werden (21), für die kein Datenwert in der Ausgangsdatenmenge ermittelt wurde, und diese zweiten Daten zu der Basisdatenmenge oder zu den einzelnen Teildatenmengen hinzugefügt werden.

3. Verfahren nach Anspruch 1 oder 2, wobei zusätzliche, aktuelle Daten bereitgestellt werden und ein aktuelles Vorhersagemodell basierend auf einer Gesamtdatenmenge, umfassend die aktuellen Daten und die Basisdatenmenge, gelernt werden (22).

4. Verfahren nach Anspruch 1 oder 2, wobei zusätzliche, aktuelle Daten bereitgestellt werden und ein aktuelles Vorhersagemodell basierend auf dem vorher gelernten Vorhersagemodell und ausschließlich den aktuellen Daten gelernt wird (23)

5. Verfahren nach einem der Ansprüche 1 bis 2, wobei die Ausgangsdatenmenge für das Lernen (22) eines ersten Vorhersagemodells und Aktualisieren (23) des Vorhersagemodells lediglich aktuelle Daten und Kontextdaten umfasst.

6. Verfahren nach einem der Ansprüche 1 bis 5, wobei das Lernen (15, 22, 23) der Vorhersagemodelle für die einzelnen Teildatenmengen parallel durchgeführt wird.

7. Verfahren nach einem der Ansprüche 1 bis 6, wobei das Extrahieren (13) von Kontextdaten in einer externen Rechenvorrichtung durchgeführt wird und die so aufbereiteten Daten in die Basisdatenmenge integriert wird.

8. Rechenvorrichtung zur Bereitstellung einer Prognose für eine Verfügbarkeit eines Gegenstandes an einem vorgegebenen Basisparameter, umfassend eine Speichereinheit (31), eine Extraktionseinheit (32), eine Lerneinheit (33) und eine Prognoseeinheit (34), wobei die
- Speichereinheit (31) derart ausgebildet ist, eine Ausgangsdatenmenge und/oder eine Basisdatenmenge und/oder aktuelle Daten und/oder ein gelerntes Vorhersagemodell zu speichern,
- die Extraktionseinheit (32) derart ausgebildet ist, eine Basisdatenmenge durch Extrahieren von ersten Daten und vorbestimmter Kontextdaten aus der Ausgangsdatenmenge entsprechend vorbestimmter Kategorien zu bilden, und die Basisdatenmenge in eine Vielzahl von Teildatenmengen aufzuteilen, wobei jede Teildatenmenge lediglich die Basisdaten in jeweils einem Teilbereich des Basis-Wertebereichs des mindestens einen Basisparameters umfasst,
- die Lerneinheit (33) derart ausgebildet ist ein Vorhersagemodell für jede einzelne Teildatenmenge zu lernen, und wobei
- die Prognoseeinheit (34) derart ausgebildet ist eine Prognose basierend auf mindestens einem der gelernten Teil-Vorhersagemodelle zu erstellen,
wobei die Basisparameter eine geographische Längen- und Breitenangabe sind, der Basis-Wertebereich mit Hilfe eines Koordinatennetzes in einzelne Teilbereiche unterteilt wird und jeweils ein Teilbereich eine Masche des Koordinatennetzes umschließt.

9. Rechenvorrichtung nach Anspruch 8, wobei die Extraktionseinheit (32) derart ausgebildet ist jeweils zweite Daten für alle die Basisparameter zu erzeugen, für die kein erster Datenwert in der Ausgangsdatenmenge ermittelt wurde, und diese zweiten Daten der Basisdatenmenge oder zu den einzelnen Teildatenmengen hinzuzufügen.

10. Rechenvorrichtung nach Anspruch 8 und 9, wobei die Lerneinheit (33) derart ausgebildet ist das Lernen der Vorhersagemodelle für jeweils ein oder mehrere der einzelnen Teildatenmengen parallel auszuführen.

11. Computerprogrammprodukt mit Programmbefehlen zur Durchführung des Verfahrens nach Ansprüchen 1-7.
